## Europäisches Patentamt
## European Patent Office
## Office européen des brevets

(11) Veröffentlichungsnummer : **0 151 921**
**B1**

(19)

(12)
# EUROPÄISCHE PATENTSCHRIFT

(45) Veröffentlichungstag der Patentschrift :
11.11.87

(51) Int. Cl.⁴ : **E 03 B  3/02**

(21) Anmeldenummer : 85100049.7

(22) Anmeldetag : 02.01.85

---

(54) **Regenwasserfänger für ein Regenfallrohr.**

---

(30) Priorität : **10.02.84 DE 3404792**

(43) Veröffentlichungstag der Anmeldung :
**21.08.85 Patentblatt 85/34**

(45) Bekanntmachung des Hinweises auf die Patenterteilung : **11.11.87 Patentblatt 87/46**

(84) Benannte Vertragsstaaten :
**AT CH DE FR GB LI**

(56) Entgegenhaltungen :
**DE-A- 2 747 008**
**DE-A- 3 105 744**
**GB-A- 1 573 321**

(73) Patentinhaber : **Marley Werke GmbH**
**Postfach 1140**
**D-3050 Wunstorf 1 (DE)**

(72) Erfinder : **Evans, Michael J.**
**c/o Marley Werke GmbH Postfach 1140**
**D-3040 Wunstorf 1 (DE)**

(74) Vertreter : **Glawe, Delfs, Moll & Partner Patentanwälte**
**Rothenbaumchaussee 58 Postfach 2570**
**D-2000 Hamburg 13 (DE)**

EP 0 151 921 B1

## Beschreibung

Die Erfindung betrifft einen Regenwasserfänger für ein Regenfallrohr von der im Anspruch 1 angegebenen Art. Derartige Regenwasserfänger sind bekannt z. B. durch DE-A-31 05 744 sowie durch auf dem Markt befindliche Ausführungsformen und entsprechende Firmenprospekte. Derartige Regenwasserfänger werden in Regenfallrohre eingebaut, um einen Teil des Regenwassers aus dem Fallrohr heraus in einen Sammelbehälter leiten zu können, um ständig einen Regenwasservorrat z. B. zur Bewässerung des Gartens od. dgl. zur Verfügung zu haben. Die Anordnung der Tasche mit Überlaufwand bewirkt, daß die Regenwasserableitung in den Sammelbehälter automatisch aufhört, sobald der Wasserspiegel im Sammelbehälter die Höhe der Oberkante der Überlaufwand erreicht hat. Das weitere zuströmende Regenwasser läuft dann bei gefüllter Tasche über die Überlaufwand in das Fallrohr ab. Für diese selbsttätige Steuerung werden keinerlei bewegliche Teile am Regenwasserfänger oder am Sammelbehälter benötigt.

Aufgabe der Erfindung ist es, einen Regenwasserfänger der angegebenen Art so zu verbessern, daß er ohne Beeinträchtigung der Auffang- und Ableitwirkung eine verbesserte Selbstreinigung aufweist und eine geringere Behinderung des Leitungsquerschnitts des Regenfallrohres darstellt.

Die Lösung dieser Aufgabe, und vorteilhafte Ausgestaltungen der Lösung, sind in den Ansprüchen angegeben.

Durch die Schrägneigung des Bodens der Tasche wird eine gute Selbstreinigung von Schmutz und Ablagerungen erzielt. Gleichzeitig wird insbesondere durch die Trennung der Tasche in zwei gegeneinander höhenversetzte Teiltaschen erreicht, daß insbesondere bei starkem Regenwasseranfall ein relativ großer Druchtrittsquerschnitt des Regenfallrohres erhalten bleibt, da auch der vertikale Spalt zwischen den beiden Teiltaschen zur Wasserableitung zur Verfügung steht und das in der höher gelegenen Teiltasche aufgefangene Wasser ableiten kann.

Eine Ausführungsform der Erfindung wird anhand der Zeichnungen näher erläutert.

Fig. 1 zeigt eine perspektivische, aufgebrochene Darstellung des Regenwasserfängers ;

Fig. 2 zeigt den Regenwasserfänger im Längsschnitt.

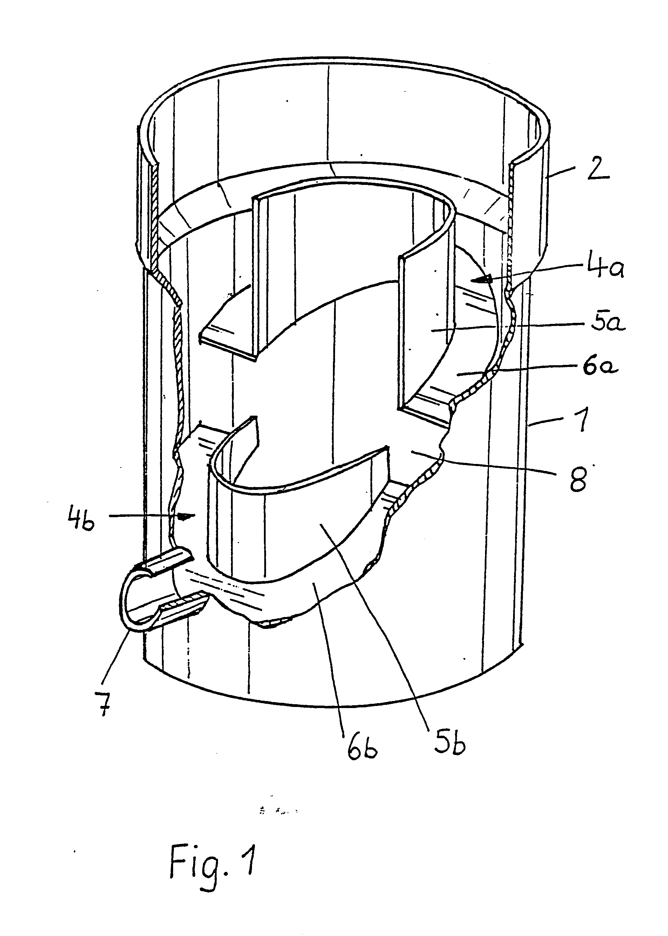

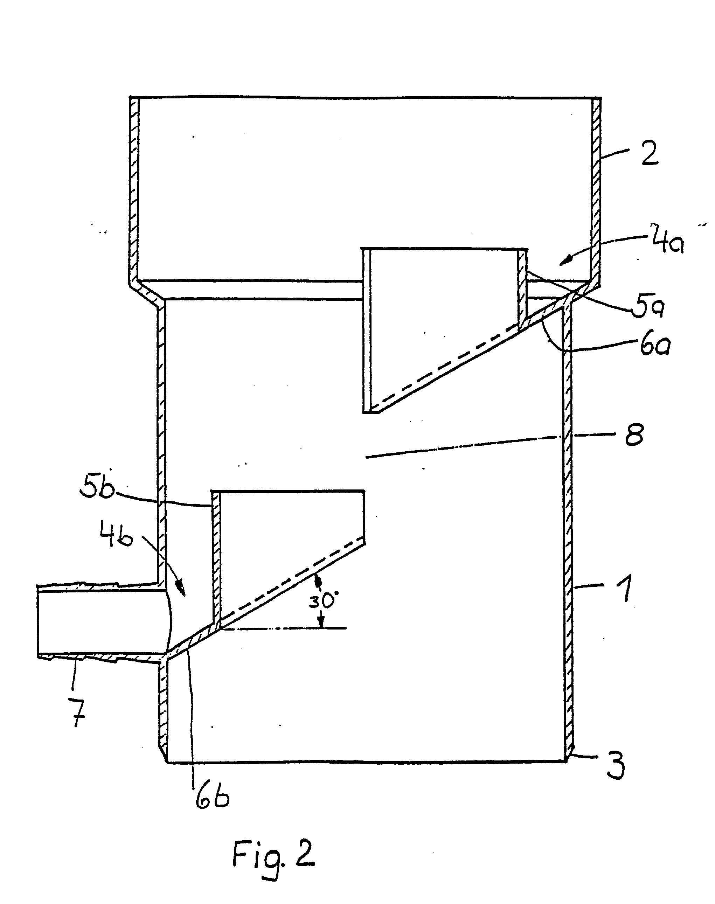

Der in den Fig. 1 und 2 dargestellte Regenwasserfänger für ein Regenfallrohr besteht aus einem rohrförmigen Gehäuse 1, das am oberen Ende mit einem muffenartig aufgeweiteten Teil 2 und an seinem unteren Ende mit einer Fase 3 für den Anschluß an das Regenfallrohr ausgebildet ist. In der Innenwand des Gehäuses ist eine umlaufende Tasche 4a, 4b durch eine halbrohrförmige Überfallwand 5a, 5b und einem, die Überfallwand 5a, 5b und das Gehäuse 1 verbindenden Boden 6a, 6b gebildet. Der Boden 6a und 6b der Tasche 4a, 4b verläuft geneigt, insbesondere um etwa 30° zur Anschlußebene des Regenwasserfängers und mündet an seiner tiefsten Stelle in einen Ableitstutzen 7. Dabei ist die Tasche entlang einer Radialebene des Gehäuses 1 in zwei jeweils um den halben Umfang umlaufende Teiltaschen 4a und 4b geteilt, die in Richtung der Mittelachse des Gehäuserohres 1 zueinander höhenversetzt sind. D. h., die die eine Teiltasche 4a bildenden Teile der Überfallwand 5a und des Bodens 6a sind zu den, die andere Teiltasche 4b bildenden Teile in der Überfallwand 5b und des Bodens 6b höhenversetzt. Der Tiefpunkt des geneigten Bodens 6b schließt dabei bündig an die Sohle des Ableitstutzens 7 für die Regenwasserableitung in den Sammelbehälter.

Wie aus den Figuren zu ersehen ist, wird durch den Höhenversatz und die Trennung der Taschen 4a, 4b erreicht, daß zwischen den beiden Taschen 4a, 4b ein vertikaler Spalt 8 entsteht, der bei starkem Regenwasseranfall zur Wasserableitung beiträgt und somit einen relativ großen Durchschnittsquerschnitt des Regenfallrohres im Bereich des Regenwasserfängers ermöglicht.

## Patentansprüche

1. Regenwasserfänger für ein Regenfallrohr, bestehend aus einem rohrförmigen Gehäuse (1), das am oberen und unteren Ende für den Anschluß mittels Muffenverbindung od. dgl. mit dem Regenfallrohr ausgebildet ist, und einer an der Innenwand des Gehäuses nach innen vorspringenden, im wesentlichen um den ganzen Umfang ringförmig umlaufenden Tasche (4a, 4b), die von einem an die Innenwand anschließenden Boden (6a, 6b) und einer von der Innenkante des Bodens nach oben ragenden Überfallwand gebildet ist, sowie mit einem im Bereich des Bodens der Tasche durch die Gehäusewand nach außen geführten Ableitungsstutzen, dadurch gekennzeichnet, daß der Boden (6a, 6b) der Tasche in Umfangsrichtung des Gehäuses (1) geneigt verläuft und der Ableitungsstutzen (7) im Bereich des tiefsten Punktes des geneigten Bodens (6b) angeordnet ist.

2. Regenwasserfänger nach Anspruch 1, dadurch gekennzeichnet, daß der Tiefpunkt des geneigten Bodens (6b) bündig mit der Sohle des Ableitungsstutzens (7) verläuft.

3. Regenwasserfänger nach Anspruch 1, dadurch gekennzeichnet, daß der Boden (6a, 6b) der Tasche in einer zur Achse des Gehäuses um etwa 30° geneigten Ebene liegt.

4. Regenwasserfänger nach einem der Ansprüche 1 bis 3, dadurch gekennzeichnet, daß die Tasche entlang einer Radialebene des Gehäuses (1) in zwei jeweils um den halben Umfang umlaufende Teiltaschen (4a, 4b) geteilt ist und die beiden Teiltaschen in Achsrichtung des Gehäuses gegeneinander höhenversetzt sind.

**Claims**

1. Rainwater collector for a drain-pipe, consisting of a tubular housing (1) which is arranged at its top and bottom ends for connection to the drain-pipe by a sleeve joint or the like, and a trap (4a, 4b) projecting inwards on the inner wall of the housing and extending in an annular configuration substantially around the entire periphery, the trap (4a, 4b) being formed by a base (6a, 6b) adjoining the inner wall and an overflow wall projecting upwards from the inner edge of the base, and with an outflow connection leading through the housing wall in the region of the base of the trap, characterised in that the base (6a, 6b) of the trap is inclined in the circumferential direction of the housing (1) and the outflow connection (7) is arranged in the region of the lowest point of the inclined base (6b).

2. Rainwater collector as claimed in claim 1, characterised in that the low point of the inclined base (6b) is flush with the bottom of the outflow connection (7).

3. Rainwater collector as claimed in claim 1, characterised in that the base (6a, 6b) of the trap lies in a plane which is inclined at about 30° to the axis of the housing.

4. Rainwater collector as claimed in one of claims 1 to 3, characterised in that the trap is divided, along a radial plane of the housing (1), into two trap parts (4a, 4b) each of which extends around half the circumference, and the two trap parts are vertically offset from each other in the axial direction of the housing.

**Revendications**

1. Collecteur pour tuyau de descente d'eau pluviale, se composant d'une enveloppe tubulaire (1) qui est façonnée à ses extrémités supérieure et inférieure en vue de son raccordement au tuyau de descente par assemblage à emboîtement, et d'une poche (4a, 4b) qui fait saillie vers l'intérieur sur la paroi interne de l'enveloppe et s'étend en anneau, pratiquement sur toute la circonférence, cette poche étant formée par un fond (6a, 6b) qui se raccorde à la paroi interne et par une paroi-déversoir (5a, 5b) faisant saillie vers le haut à partir du bord interne du fond, ainsi que d'une tubulure de décharge (7) qui passe à travers la paroi de l'enveloppe vers l'extérieur au niveau du fond de la poche, caractérisé en ce que le fond (6a, 6b) de la poche s'étend en position inclinée dans la direction circonférentielle de l'enveloppe (1) et en ce que la tubulure de décharge (7) est disposée dans la région du point le plus bas du fond incliné (6b).

2. Collecteur d'eau pluviale selon la revendication 1, caractérisé en ce que le point bas du fond incliné (6b) est à fleur du fond de la tubulure de décharge (7).

3. Collecteur d'eau pluviale selon la revendication 1, caractérisé en ce que le fond (6a, 6b) de la poche est dans un plan incliné d'environ 30° par rapport à l'axe de l'enveloppe.

4. Collecteur d'eau pluviale selon l'une quelconque des revendications 1 à 3, caractérisé en ce que la poche est subdivisée, le long d'un plan radial de l'enveloppe (1), en deux poches partielles (4a, 4b) qui s'étendent chacune sur une demi-circonférence et en ce que les deux poches partielles sont décalées en hauteur l'une par rapport à l'autre dans la direction axiale de l'enveloppe.

Fig. 1

Fig. 2